# EUROPEAN PATENT APPLICATION

(11) **EP 4 290 713 A2**
(43) Date of publication of application: **13.12.2023**
(21) Application number: 23175132.2
(22) Date of filing: 24.05.2023
(51) Int. Cl.: H02G 3/08, H02G 3/12, H02G 3/14

(54) **MODULE**

(30) Priority: 09.06.2022 GB 202208445
(71) Applicant: Corston Ltd, Calne Wiltshire SN11 9HN (GB)
(72) Inventor: GRAY, David, Calne, SN11 9HN (GB); STUART, Meredith, Calne, SN11 9HN (GB); FOX, Connor, Wiltshire, SN11 9HN (GB); DUFFY, James, Calne, SN11 9HN (GB); TITHERINGTON, Ross, Calne, SN11 9HN (GB); ASSEJEV, Anja, Calne, SN11 9HN (GB)
(74) Representative: CSY London

(57) **Abstract**

The present invention relates to a module for housing electrical components in a wall. Particularly, though not exclusively, the invention relates to a module comprising a body or back box defining a chamber for housing electrical components and a mounting plate adapted for connection to an external fascia. An internal surface of the back box is shaped and configured to securely receive the mounting plate such that the mounting plate is entirely accommodated within the chamber in a secured configuration. The invention also relates to a module having a body or back box and a plurality of complementary inter-engageable components that have a plurality of inter-engaging features adapted to selectively engage with the back box to create a variety of different configurations of the module.

## Description

The present invention relates to a module for housing electrical components in a wall. Particularly, though not exclusively, the invention relates to a module comprising a back box and a mounting plate, wherein the back box is shaped for insertion within a wall cavity and configured to accommodate the mounting plate within a volume defined by the back box. The invention also relates to a module having a back box adapted for selective use with a plurality of inter-engaging features that are adapted to selectively engage with the back box to create a variety of different configurations of the module.

Back boxes for switches and/or electric sockets are typically embedded within a wall and function to safely house electrical components behind an outer fascia carrying a switch or providing a socket. Various standards and conventions govern the internal arrangement, size, design and configuration of back boxes. Typically, standard back boxes are available to house the various electrical components for surface mounted switches and sockets fixtures. Surface mounted switch or socket covers are typically designed to fit over, engage with and conceal these standard back boxes.

It is an object of the present invention to provide a system which improves functionality of the back box and overall aesthetics of the back box and fascia.

According to a first aspect of the invention there is provided a module for housing within a wall in use such that the module does not extend substantially beyond an external planar face of the wall, the module comprising:
a body defining a chamber for housing electrical components;
a mounting plate adapted for connection to an external fascia, the mounting plate shaped and configured for accommodation within the chamber of the body; and
wherein an internal surface of the body is shaped and configured to securely receive the mounting plate in a secured configuration, such that the mounting plate is entirely accommodated within the chamber of the body in the secured configuration.

Preferably, the module is mountable within a wall such that the module does not extend beyond an external surface of the wall. The module may be mountable within a wall cavity or in a void within a solid wall on any structural, partition or other wall and which wall may be subject to an external surface finish, such as render or plaster. Thus, in a secured configuration in use, the module is preferably completely contained behind an external surface of a wall such that no part of the module protrudes substantially beyond the planar outer face of the wall.

The body may be arranged for housing electrical components for the selective supply of power to one or more electrical devices. An exterior of the body may be configured to enable mounting of the body within a wall. An external surface of the body may be moulded with profiled features, which profiled external features are engageable with at least a portion of the surrounding wall in use for secure location therein. The body may comprise a back box.

The chamber may be accessible via an opening defined by an outer perimeter of the body. The mounting plate may be accommodated within the chamber via the opening.

An inner surface of the body may comprise an inwardly projecting step that may act as a support or abutment for the mounting plate. The step may be located at a predetermined distance from the outer perimeter of the body, such that a portion of the volume between the step and the outer perimeter defines a mounting plate receiving portion. The inwardly projecting step may be in the form of a circumferential support spaced from the outer perimeter of the body to define a mounting plate receiving portion therebetween.

The step may extend inwardly within the body spaced from the outer perimeter for at least a portion of the perimeter, such that the step may act as an abutment for the mounting plate in at least two spaced locations. Alternatively, the step may extend inwardly and continuously within the body spaced equidistant from the outer perimeter or rim along its length such that the step forms a continuous abutment for the mounting plate.

The body may comprise at least two elongate slots for receiving fixing means enabling the mounting plate to be fixed in the secured configuration within the receiving portion defined between the step and outer perimeter of the body. The mounting plate may be provided with holes in locations corresponding to the elongate slots such that fixing means can extend through the holes and elongate slots to secure the mounting plate within the chamber. The fixing means may comprise screws or some other suitable means for interconnection of the body and the mounting plate.

The outer perimeter of the body and an external face of the mounting plate may form a substantially planar external surface in the secured configuration. The module may be housed within a wall in use, such that the outer perimeter of the body, an external face of the mounting plate and an external surface of the wall are substantially contiguous. Thus, when housed within a wall in use, the module may lie 'flush' with the outer surface of the wall.

Thus, the module of the first aspect of the invention is arranged to house electrical components and accommodate the mounting plate entirely within a volume defined by the body, enabling the entire module including the mounting plate to be located within the wall. This is advantageous since in the secured configuration, both the body with the mounting plate adapted for connection to an external fascia can be entirely housed within a wall without any components protruding therefrom. As a result, the extent to which the module extends beyond the planar surface of the wall is minimised and determined only by the thickness of the external fascia.

The body is preferably arranged to house electrical components and selectively interconnect the electrical components with an external power source. The external fascia may provide the means for selective interconnection with the external power source. The external fascia may comprise any externally mountable switch or a socket.

The mounting plate is preferably configured to interconnect with the external fascia. The mounting plate may be connectable to the external fascia in the form of an externally mountable switch or socket via any suitable connecting means such as an interference fitting, resilient connecting means, complementary inter-engagable portions and/or fixing means.

Optionally, the mounting plate is connectable to the external fascia via spring clips. The mounting plate may comprise receiving slots in its external face and a rear of the external fascia may comprise at least one spring clip for the secure interconnection of the mounting plate and the external fascia.

The external fascia may extend less than around 3mm beyond an external surface of the wall. Preferably the external fascia may extend less than around 2mm beyond an external surface of the wall. The external fascia may extend by around 1.5 mm beyond an external surface of the wall.

The module of the first aspect of the invention may further comprise a plurality of inter-engaging features and selectively engageable complementary components, each complementary component arranged to selectively engage with at least one of the inter-engaging features to alter the configuration of the module. The inter-engaging features and selectively engageable complementary components are described with reference to the third aspect of the invention.

According to a second aspect of the invention, there is provided a kit of parts comprising a module with a body and mounting plate according to the first aspect of the invention.

According to a third aspect of the invention there is provided a module mountable within a wall in use, the module comprising:
a body defining a chamber for housing electrical components and having a plurality of inter-engaging features; and
selectively engageable complementary components, each complementary component arranged to selectively engage with at least one of the inter-engaging features of the body to form different configurations of the module; and
wherein, the selectively engageable complementary components comprise at least three components selected from the group including but not limited to: securing features, a trim, a collar, a cover, an insert, a divider, and a mounting plate.

Preferably, the module may comprise a plurality of selectively engageable complementary components selected from the group including but not limited to: wall securing features, a trim, a collar, a cover, an insert, a divider, a mounting plate, and an external fascia.

Thus, the inter-engaging features of the module enable manufacture of a generic body that has enhanced versatility and can be used to form a module in a plurality of different configurations by adding the required complementary components. This facilitates use of the same body design in a variety of different ways avoiding the need for bespoke back boxes or modules for each wall surface and/or each set of external fascia features.

An exterior of the body may be adapted for location within a wall in an operational position. The body may define an inner chamber to accommodate the electrical components, which chamber is accessible via an opening defined by a perimeter around an outer edge of the body. The perimeter may extend in a rim marginally protruding beyond an external surface of the body. The outer perimeter or rim may be arranged for alignment with an external surface of the wall in use, such that the body is entirely accommodated within the wall and the outer perimeter or rim lies 'flush' with an external surface of the wall in use.

The module may comprise a selectively engageable complementary component in the form of a collar to enable use of the module on walls to be covered with a surface finish such as render, plaster or the like. The collar may comprise a substantially planar collar portion arranged to extend parallel to a surface of the wall in use.

The collar and an exterior of the body may comprise complementary inter-engaging features enabling the collar to securely engage with the body in use. The inter-engaging features may comprise locator key and slot features such that the collar is accurately positioned on the exterior of the body with the planar collar portion spaced at a preselected distance from the rim of the body, the pre-selected distance corresponding to the depth of the intended surface finish to be applied to the wall. The inter-engaging features on the body may comprise resilient locator keys and locator receiving slots provided on the collar and the body. The inter-engaging features may engage the collar such that the collar is spaced at a predetermined distance from the outer perimeter of the body. The spacing between the collar and the outer perimeter is pre-determined according to the pre-selected thickness of the surface finish.

The planar collar portion may comprise anchor means to increase the surface area in contact with plaster, render, or the like, in use and thus anchor the module in position within a wall covered with a surface finish. The anchor means may comprise a plurality of holes located in the planar collar portion to increase the available surface area in contact with the surface finish. Advantageously, the anchor means enable the surface finish to 'key' into the planar collar portion so that the body is held securely within the finished wall.

The collar may comprise a centrally disposed opening shaped to fit around the exterior of the body. The collar may comprise a flange extending substantially perpendicular from the planar collar portion, wherein the flange defines the centrally disposed opening. Preferably, the flange has a depth corresponding to the pre-selected depth of the surface finish intended to form the exterior of the wall surface. Thus, the collar may be securable to the exterior of the body in use and the rim or outer perimeter of the body is spaced at a known distance from an interior wall surface, the distance corresponding to the depth of the surface finish to be applied to the interior wall surface such that the finished wall lies 'flush' with the rim of the body.

The module may further comprise a selectively engageable complementary component in the form of a cover. The cover may comprise a cap shaped to substantially cover the opening of the body and restrict ingress of debris into the chamber housing electrical components. In an engaged configuration when the cover is coupled to the body, the cover may create an enclosure for the chamber such that electric components housed therein are substantially protected. The cover may comprise a substantially thin piece of material having dimensions matching the opening of the body.

The cover may comprise a substantially planar outer surface with inter-engaging features on the opposing surface of the cover. The inter-engaging features on the cover may be adapted to cooperate with corresponding inter-engaging features on an inner surface of the body, such that the cover is engageable with the body to substantially enclose the chamber. The complementary inter-engaging features on the cover and the body may comprise resilient protrusion and slot features that are engageable to secure the cover over the opening within the body in an engaged configuration.

The dimensions of the cover may be preselected such that the cover is accommodated within an area defined by the body wherein the cover does not extend beyond the body when the body and the cover are in the engaged configuration. The cover may be shaped and configured such that the cover is accommodated within the chamber and does not extend beyond the chamber of the body when the body and the cover are in the engaged configuration.

The cover may further comprise a gripping portion. The gripping portion may comprise a moulded void located within the cover and shaped to enable the cover to be gripped securely with an external tool. Removal of the cover may be achieved using the inherent resilience of the complementary engageable features by application of a pulling force to the gripping portion via an external tool.

The module may further comprise a selectively engageable complementary component in the form of a divider. The divider may comprise a divider portion for dividing the chamber within the body into sub-compartments. Where the selectively engageable complementary components comprises a divider, the inter-engaging features may comprise complementary locating slots and locator portions. The locating slots and locator portions may be alignable in an engaged configuration and arranged to accept fixing means for the secure attachment of the divider and the body.

Alternatively, or additionally, complementary inter-engaging features on the divider and the body may comprise resilient protrusion and slot features. These inter-engaging features provided on an interior of the body may be selectively engageable with either the cover or the divider. Thus, an interior of the body may comprise inter-engaging features that are selectively engageable with complementary features on either the cover or the divider.

The module may further comprise a selectively engageable complementary component in the form of a mounting plate. An internal surface of the body may be shaped and configured to securely receive the mounting plate such that the mounting plate is entirely accommodated within the chamber of the body in a secured configuration. Where the selectively engageable complementary components comprises a mounting plate, the inter-engaging features may comprise fixing means in the form of slots and screws to engage the mounting plate and the body in the secured configuration.

The body may further comprise an inwardly projecting step located at a predetermined distance from the outer perimeter of the body, such that the step and the outer perimeter defines a receiving portion. The mounting plate may be entirely accommodated within the receiving portion in the secured configuration.

The module may further comprise an external fascia connectable to the mounting plate such that only the external fascia extends beyond a planar face of the wall in use.

Alternatively, or additionally, the module may comprise a selectively engageable complementary component in the form of a wall securing feature. The wall securing feature may comprise a plurality of gripping members to engage a rear face of a vertical wall. The body may comprise selectively engageable complementary components in the form of gripping member channels, each channel formed in an exterior of the body perpendicular to a planar wall surface in use and arranged to accept a threaded screw on which a gripping member is inserted.

The module may comprise a selectively engageable complementary component in the form of a trim. The trim may comprise a band shaped and configured for insertion over an exterior of the body. The protruding rim at the outer perimeter of the opening of the body may present an impediment to movement of the trim beyond the outer perimeter of the body such that the trim is retained over the body.

The body may be engageable with at least two of the complementary components simultaneously to form different configurations of the module. For example, the cover and the collar may be simultaneously secured to the body, or the divider and the mounting plate may be simultaneously secured to the body.

According to a fourth aspect of the invention, there is provided a kit of parts comprising a module with a body and at least two selectively engageable complementary components according to the third aspect of the invention.

The above-described aspects of the invention may be combined with any other aspect, feature or embodiment described in the specification or shown in the figures where appropriate.

Embodiments of the invention are now described with reference to the following drawings in which:
Figures 1a and 1b are exploded and isometric views of a back box of one embodiment of a module according to the invention;
Figures 2a and 2b are partially exploded and isometric views of a back box and cover of the module;
Figures 3a and 3b are partially exploded and isometric views of a back box with a divider according to one embodiment of the module;
Figures 4a and 4b are isometric views of a collar and back box in separate and assembled configurations respectively;
Figure 5a and 5b are isometric views of a trim and back box in separate and assembled configurations respectively;
Figure 6a to 6d are side, plan, end and isometric views respectively of the back box shown in Figure 1;
Figures 7a to 7e are rear, side, plan, isometric and end views respectively, of the divider shown in Figure 3;
Figures 8a to 8d are rear, plan, side and isometric views respectively of the cover shown in Figure 2;
Figures 9a to 9d are underside plan, end, perspective and side views respectively of the collar of Figure 4;
Figures 10a to 10d are plan, end, perspective and side views respectively of the trim of Figure 5;
Figures 11a and 11b are perspective and side views of the back box and cover of Figure 2 in position on a wall;
Figures 12a and 12b are perspective and side views of the back box, cover and trim of Figure 5 in position on a wall;
Figures 13a and 13b are perspective and side views of the back box, cover and collar of Figure 4 in position on a wall;
Figures 14a to 14e are plan, end, sectional along the line D-D, side and sectional along the line C-C views respectively, of a mounting plate for attachment to the back box;
Figures 15a to 15c are plan, side and rear perspective views respectively of another embodiment of a mounting plate for connection with a back box of an alternative shape;
Figures 16a and 16b are side views of the backing plate of Figures 15 and an external cover in pre-assembled and assembles configurations respectively, and Figures 16c to 16e are plan, sectional along the line A-A and isometric views respectively of the assembled mounting plate and cover;
Figures 17a and 17b are a side view and a sectional view along the line E-E respectively, of the back box of Figure 1 with the external fascia mounted thereon; and
Figures 18a and 18b are a plan view and a sectional view along the line F-F respectively, of the back box of Figure 1 with the mounting plate of figures 14 attached thereto in a secured configuration.

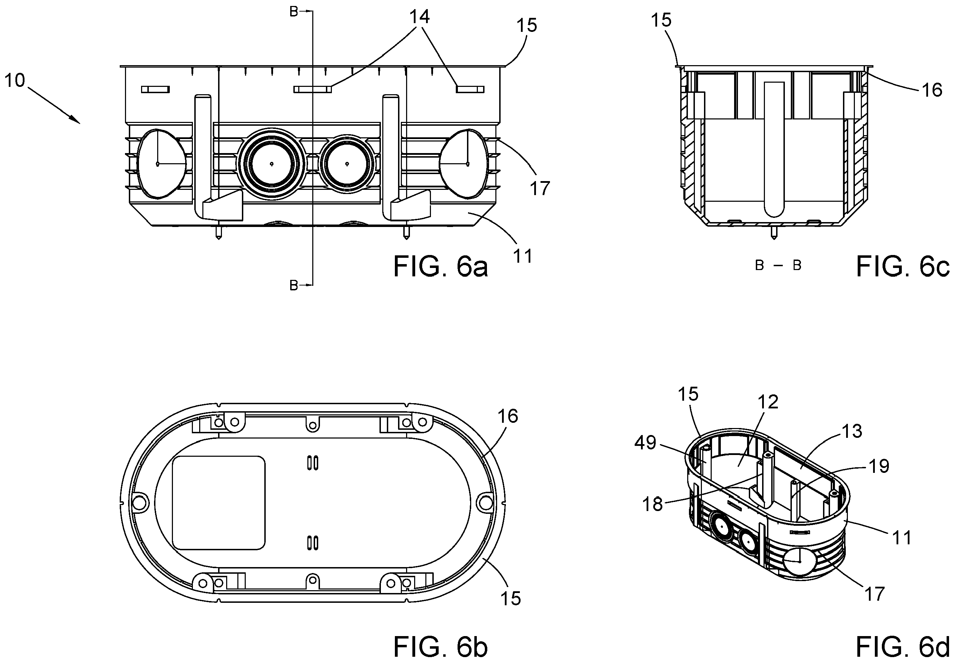

A module in various configurations is shown generally at 60 in several of the figures. The module 60 comprises a back box 10: different views of the back box 10 are illustrated in Figures 6a to 6d. The back box 10 comprises a body in the form of a moulded plastic container 11 with rounded edges. An exterior of the back box 10 has a profiled external surface 17 to increase the surface area of the container 11 in contact with a wall in use and therefore facilitate the securing of the back box 10 within a wall cavity.

The container 11 forming the back box 10 defines an internal chamber 12 for housing electrical components within the module 60. The internal chamber 12 is accessible via an opening 13 defined by a rim 15 on an upper edge at the outer perimeter of the container 11. The rim 15 extends marginally beyond the profiled external surface 17 of the container 11.

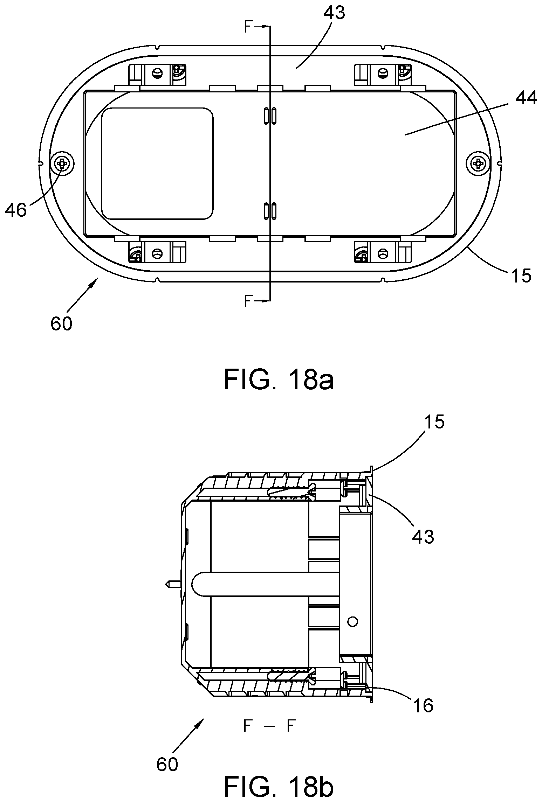

Within the interior of the container 11, an inwardly extending step 16 is provided spaced from the rim 15, to create a circumferential support proximate to the opening 13. A portion of the volume between the inwardly extending step 16 and the rim 15 defines a mounting plate receiving portion within which a mounting plate 43 is accommodated in a secured configuration, as shown in figures 18a and 18b. Therefore, the mounting plate 43 is fully received within the chamber 12 of the container 11 in the secured configuration such that an outer surface of the mounting plate 43 and a planar outer surface of the rim 15 lie in the same plane.

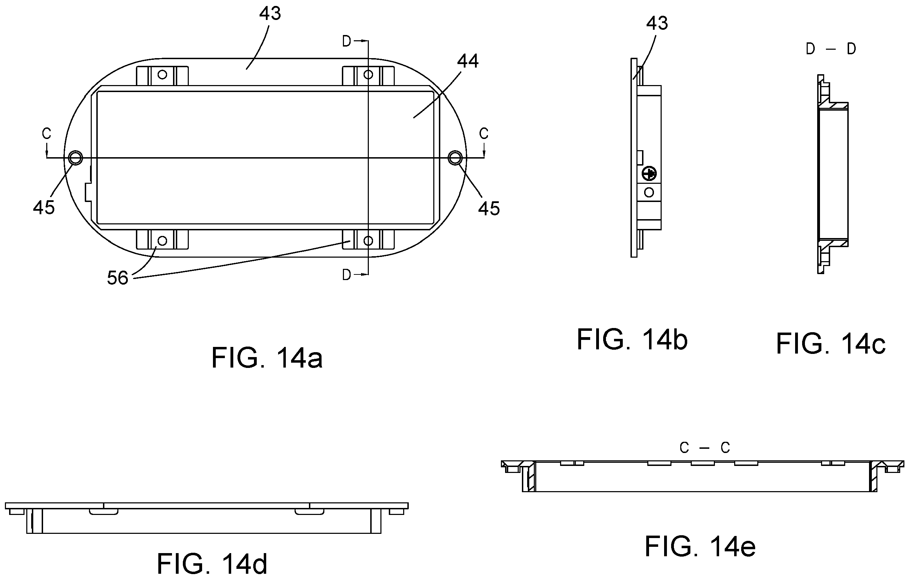

The mounting plate 43 is shown in more detail in figures 14a to 14e. The mounting plate 43 is shaped to fit within the opening 13 of the container 11. The mounting plate 43 has inter-engaging features in the form of two symmetrical holes 45 disposed along a centre line at opposing sides for receiving screw heads 46. An interior of the container 11 has complementary inter-engaging features in the form of two screw slots 49 (shown in figure 6e) disposed along a centre line at opposing sides for receiving the screws 46 that are used to secure the mounting plate 43 and the back box 10 in the secured configuration.

The mounting plate 43 has a rectangular window 44 allowing access to the chamber 12, and therefore the electrical components (not shown) within the back box 10. Towards an edge, a front face of the mounting plate 43 has two pairs of equispaced connecting slots 56 to enable interconnection of the mounting plate 43 and an external fascia 51. Connecting means in the form of spring clips on a rear side of the fascia 51 are received in the connecting slots 56.

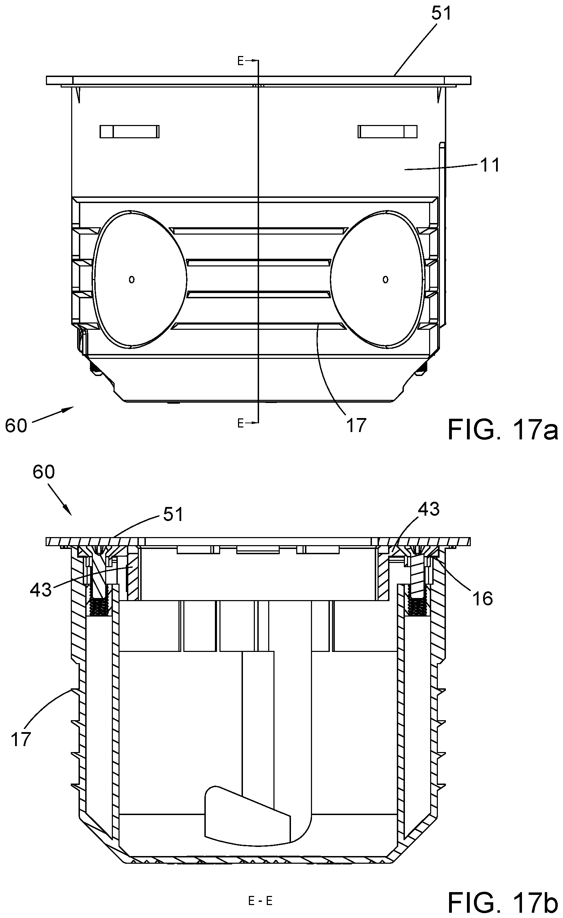

The module 60 is shown in Figure 17a and 17b with the mounting plate 43 and the back box 10 in the secured configuration and the fascia 51 connected to the mounting plate 51. The side and sectional views confirm the mounting plate 43 is received entirely within the chamber 12 such that there are no external features protruding beyond the volume defined by the container 11. The external fascia 51 extends marginally beyond the back box 10 by 1.5 mm according to the present embodiment.

The external fascia 51 may comprise an externally mountable switch or socket. The external fascia may be selected to provide the required aesthetic and is therefore available in different materials, colours and surface finishes. Suitable materials for the external fascia include metals, ceramics or plastic. The fascia may be available in a range of colours including black, metallic, white etc. Surface finishes may include smooth, shiny, reflective, brushed, polished and the like. The switch provided on the external fascia may be any type of switch suitable for the operation of remote electrically powered equipment. For example, the switch may be selected from the group including but not limited to: dimmer switches, toggle switches, rocker switches, two-way switches, three-way switches, biased switches, grouped switches and the like. The socket may be any socket selected from the group including but not limited to: SHUKO type F power module, French/Belgian type E power module, USB-C 30W module, UK power module, SHUKO/bipasso module, type K power module, bipasso power module, 10A type I power module, 15A type I power module, 5 hole Chinese power module, type J power module, cable outlet, hotel room card reader, RJ11 keystone module, RJ45 keystone module, HDMI keystone module, satellite keystone module, TV keystone module.

Thus, the module 60 containing the mounting plate 43, back box 10 and fascia 51 has aesthetic benefits since the back box 10 with the mounting plate 43 are locatable within the wall and only the external fascia protrudes beyond the surface of the wall by a minimal and controllable depth. The universal connection between the external fascia 51 and the mounting plate 43 enable a range of different fascias 51 to be connectable with a standard back box 10 and mounting plate 43 enabling a plurality of different configurations, functional variations and aesthetic finishes for the module 60.

The module 60 may also be provided with a plurality of alternative selectively engageable complementary components, which facilitate use of the same back box 10 in different applications and varied configurations.

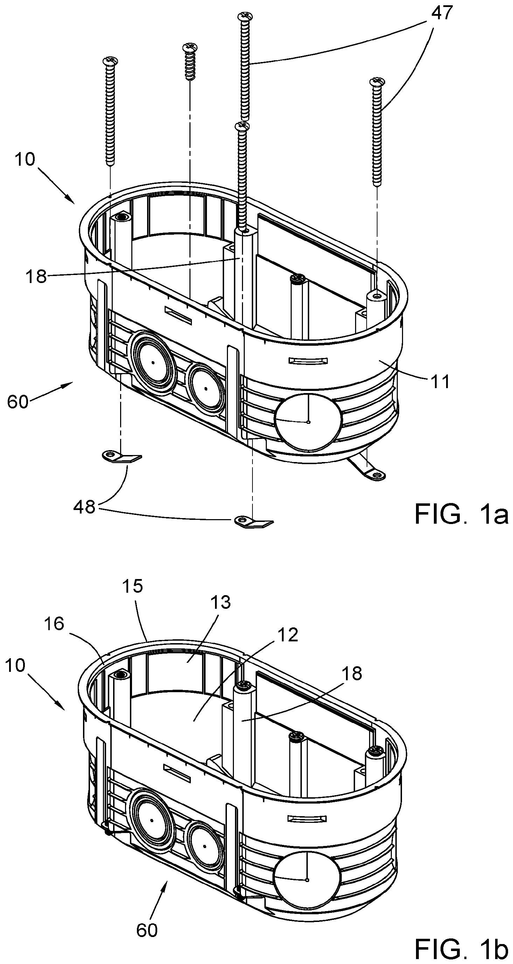

For example, the module 60 may further include securing features that are provided to anchor the back box 10 to a wall with a cavity therebehind. Figures 1a and 1b show the back box 10 with complementary engaging portions in the form of four threaded slots 18 with fixing holes located on two sides of an interior of the container 11. Screws 47 and gripping members in the form of retaining claws 48 are provided, which are accepted in the threaded slots 18. The retaining claws 48 are provided to secure the back box 10 in position against a wall by gripping a rear surface of the wall.

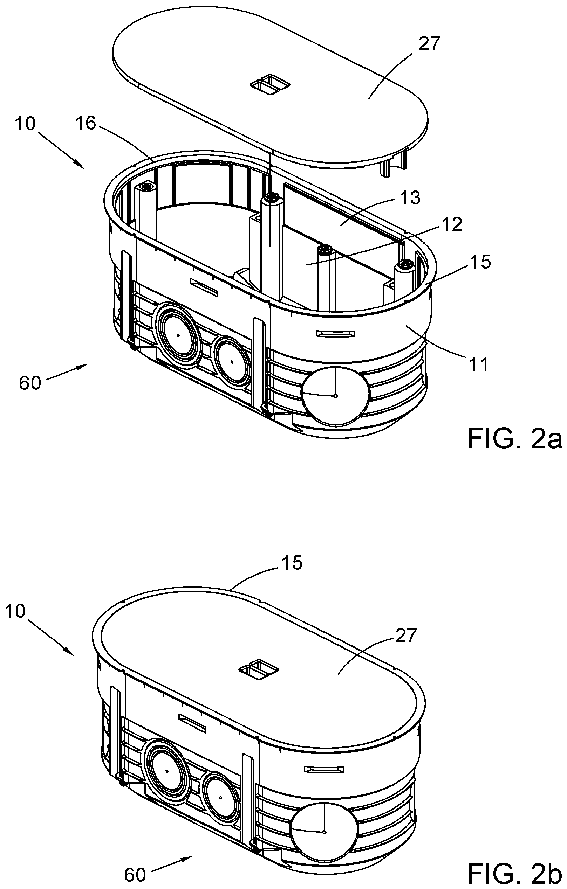

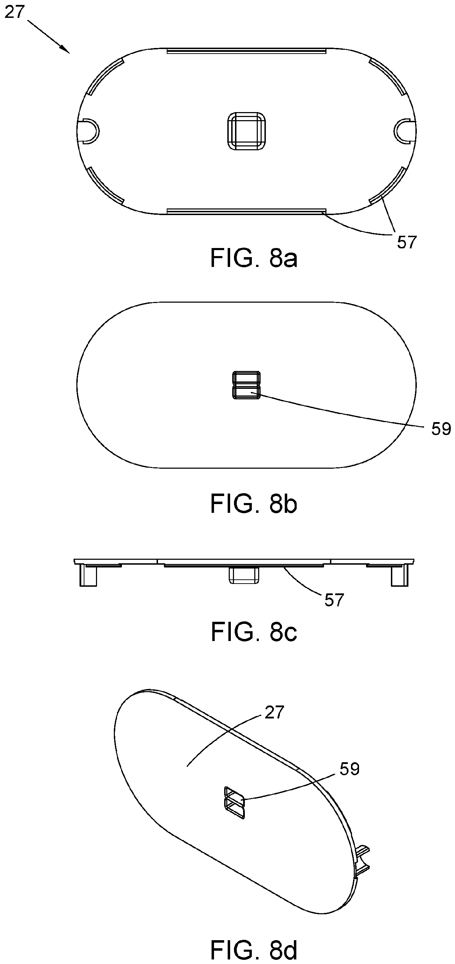

Figures 2a, 2b and 8a to 8d show another selectively engageable complementary component in the form of a moulded plastic cover 27 shaped to match the dimensions of the opening 13. The plastic cover 27 is substantially thin and arranged to cover the opening 13 in a secured configuration (figure 2b) such that the chamber 12 is enclosed by the cover 27 to thereby protect internal electrical components during installation of the back box 10 within a wall. The cover 27 has a series of circumferential friction clips 58 that are engageable with a matching grove on an internal surface of the container 11. An external surface of the cover 27 is substantially planar and therefore does not protrude beyond the rim 15 of the container 11 in the secured configuration. The opposing surface of the cover 27 may have moulded features to fit around items in the interior of the container 11. A centrally disposed gripping portion 59 is moulded into the cover to allow insertion of part of a tool, such as pliers, in order to engage with the cover 27 and enable force to be applied to remove the cover by pulling the friction clips 58 out of the grooves within the container 11.

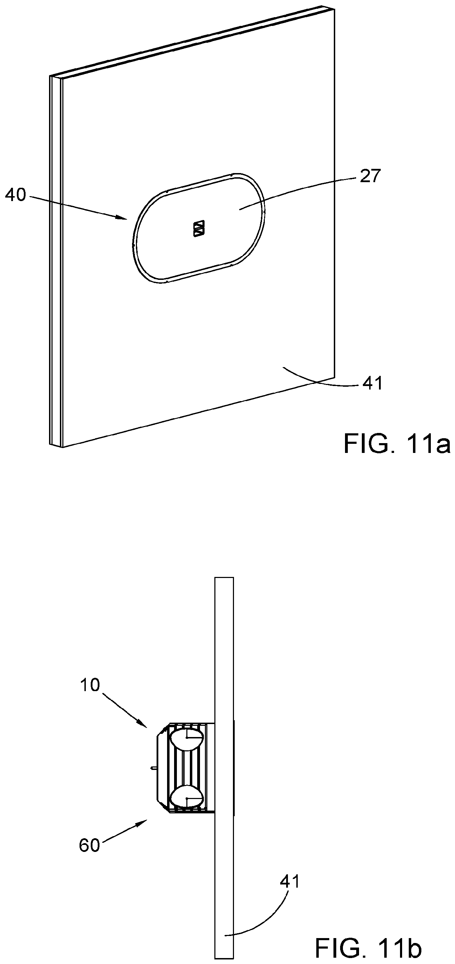

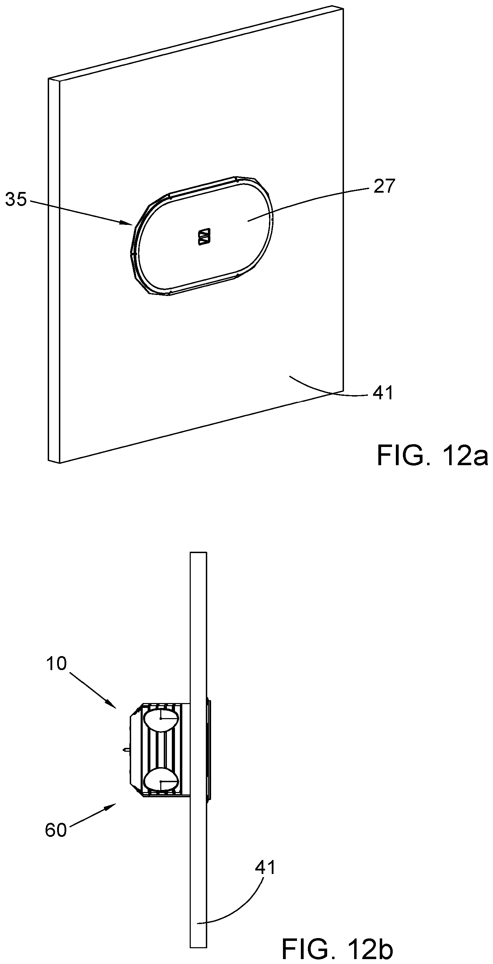

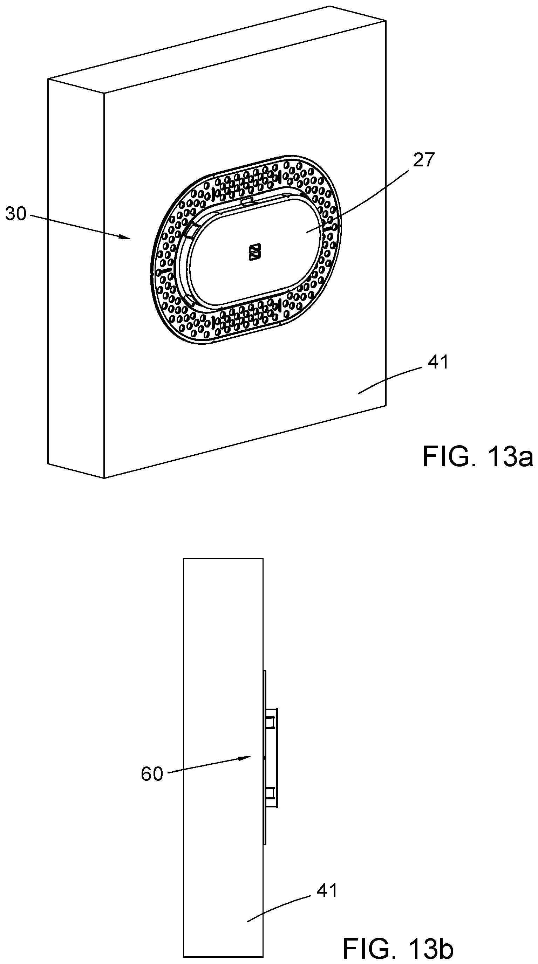

The provision of the cover 27 for selective use with the module 60 is advantageous since it restricts ingress of dust and dirt into the chamber 12 of the back box 10 to protect the electrical components housed therein. Use of the cover 27 may be especially important where additional construction works are continuing following installation of the back box 10 within a wall, but prior to secure fitting of the mounting plate 43 and fascia 51. For example, the cover 27 is shown secured over the opening 13 to the chamber 12 in figures 11a to 13b and remains in position throughout the insertion and installation of the back box 10 within a wall 41. The cover 27 is also useful to enclose the chamber 12 of the container 11 during transportation and storage of the module 60.

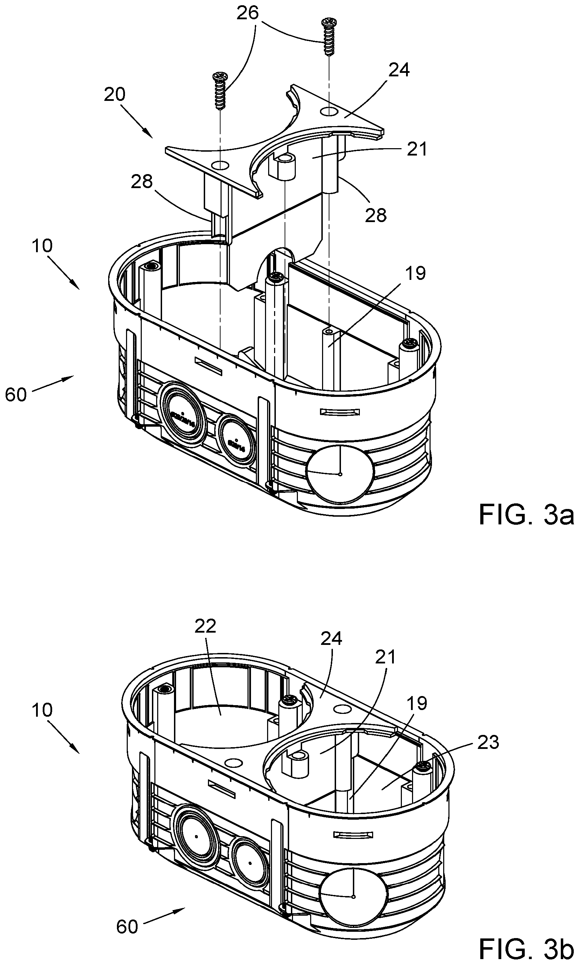

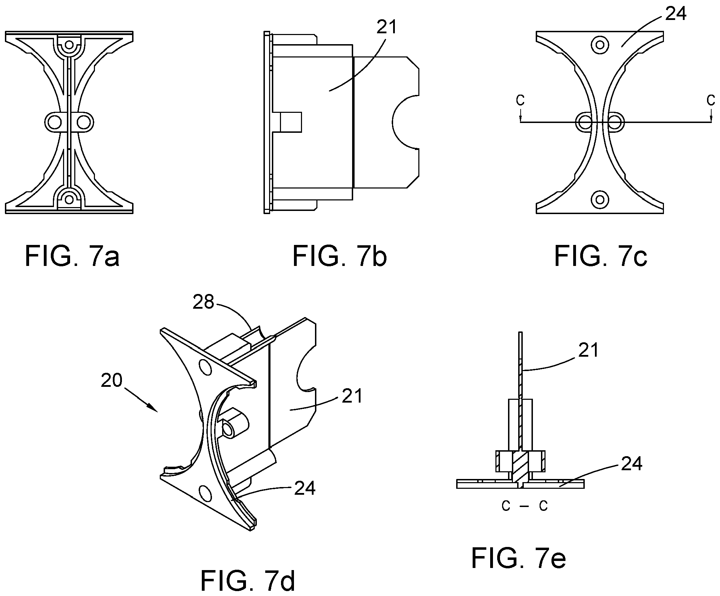

Another selectively engageable complementary component in the form of an internal divider is shown generally at 20. The divider 20 is provided to selectively divide the chamber 12 into first and second chamber portions 22, 23 and is shown in Figures 3a, 3b and 7a to 7e. The divider 20 has an upper face 24 shaped with two opposing linear edges joined by two concave arcuate edges. A dividing portion 21 depends downwardly and perpendicular from the upper face 24 and the divider portion 21 is located substantially centrally, extending between the linear edges of the face 24 to effectively form a means of separation for the chamber 12 to divide it into the first and second chamber portions 22, 23. Two outer edges of the divider portion 21 that depend in orthogonal relation to the face 24 act as complementary inter-engaging features and are in the form of parallel slots 28. The slots 28 extend part of the way along the edges of the dividing portion 21 and are cylindrical in shape with the lower portion of each slot 28 provided with a longitudinal circumferential cutaway to facilitate location of the slots 28 within the container 11. The slots 28 locate over two brackets 19 within the interior on opposing sides of the container 11. The divider 20 can be securely fixed within the back box 10 using fixing means in the form of screws 26, so that the divider 20 is held in position within the chamber 12 by these complementary inter-engaging portions. Outer linear edges of the divider 20 opposing the face 24 may also be provided with friction clips that locate within the inner groove of the container 11 previously described and also used to engage with the cover 27. This efficiently enables the interconnection of two different components (the divider 20 and the cover 27) with the module using the same features moulded into the container 11.

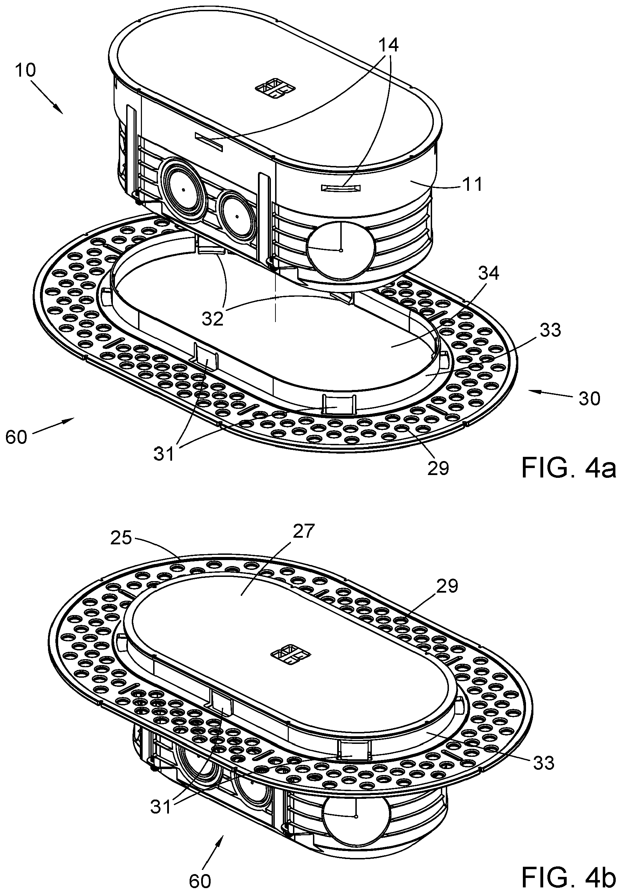

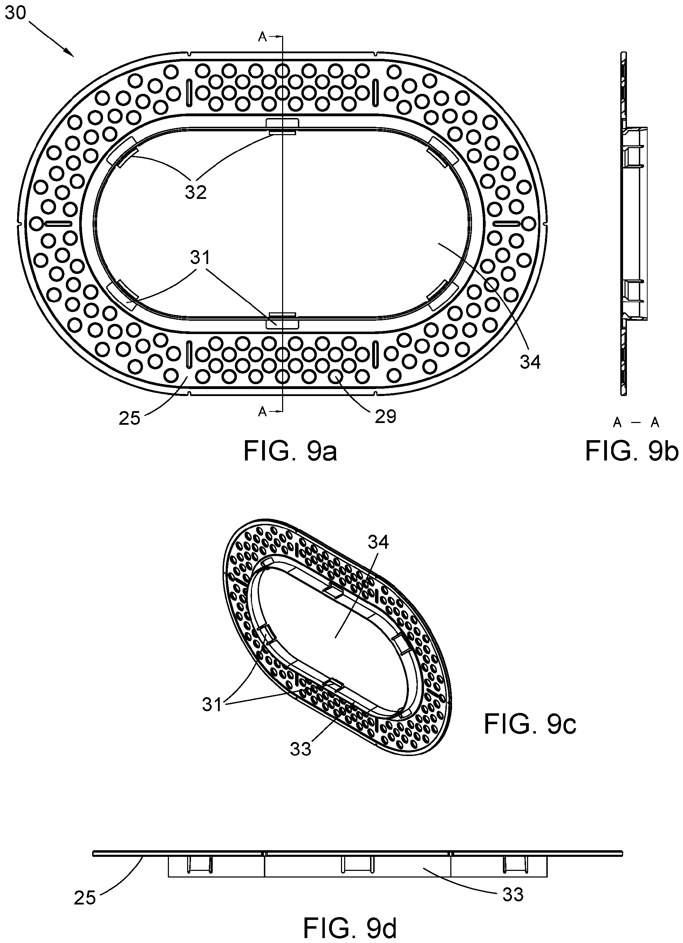

A further selectively engageable complementary component in the form of a collar 30 is shown in conjunction with the back box 10 in figures 4a and 4b, and in different views in figures 9a to 9d. The collar 30 has an elongate planar collar portion 25 with rounded edges. The collar portion 25 is provided with a plurality of anchor means in the form of holes 29 to increase the surface area and ensure that a surface finish, such as render or plaster, in use, binds to the collar 30. An interior of the collar 25 transitions to an orthogonal flange 33. The plaster collar 30 has a central elongate opening 34 with dimensions enabling the collar 30 to fit over an exterior of the container 11 of the back box 10 but smaller than the outer rim 15 such that a leading edge of the flange 33 contacts an underside of the rim 15 in use. The flange 33 is provided with several spaced resilient locator keys 31 biased inwardly and arranged on the flange 33 in locations corresponding to locating slots 14 provided on an exterior the container 11 spaced from the rim 15 of the back box 10. Each resilient locator key 31 has a locating portion that is biased to engage the slots 14 on the exterior of the container 11. Therefore, sliding the collar 30 over the container 11 results in the automatic engagement of the collar 30 and the back box 10 at the correct relative spacing.

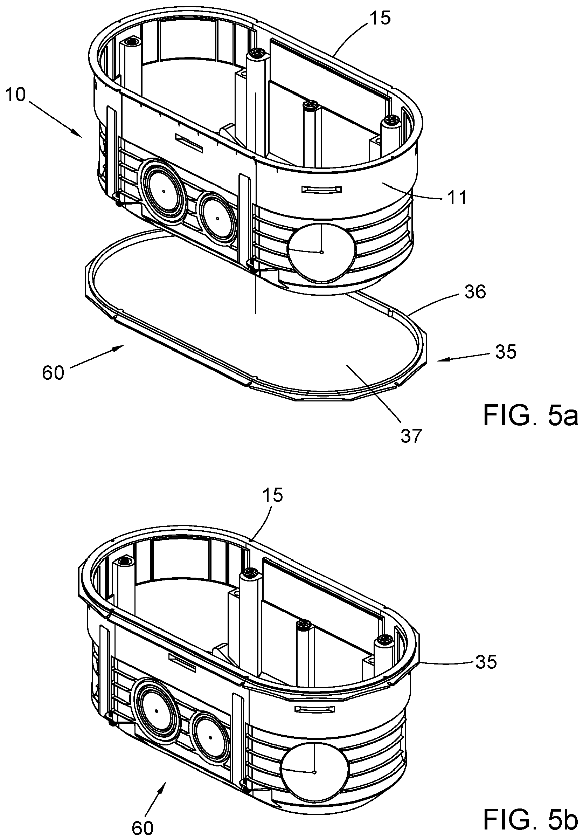

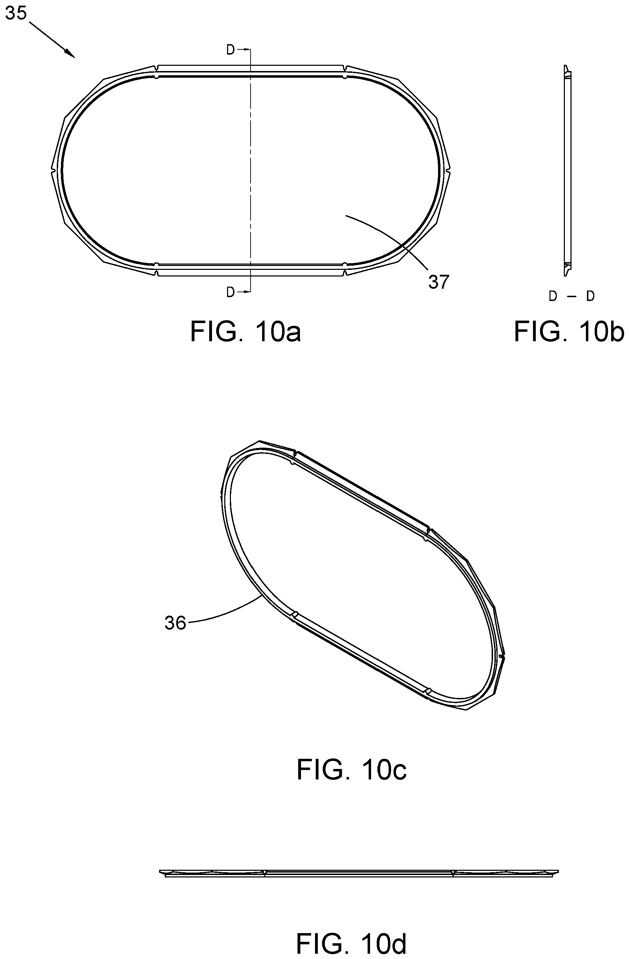

An alternative trim 35 is shown in different views in figures 10a to 10d and in conjunction with the back box 10 in figures 5a and 5b. The trim 35 has a flange 36 and a central opening 37 to accept the body 11 of the back box 10. Movement of the trim 35 beyond the opening 13 of the back box 10 is restricted by the presence of the rim 15.

The present embodiment covers a module 60 and back box 10 that has a substantially elongate shape with rounded ends. Other embodiments of the invention cover switch systems having different configurations, such as round, substantially circular or rectilinear.

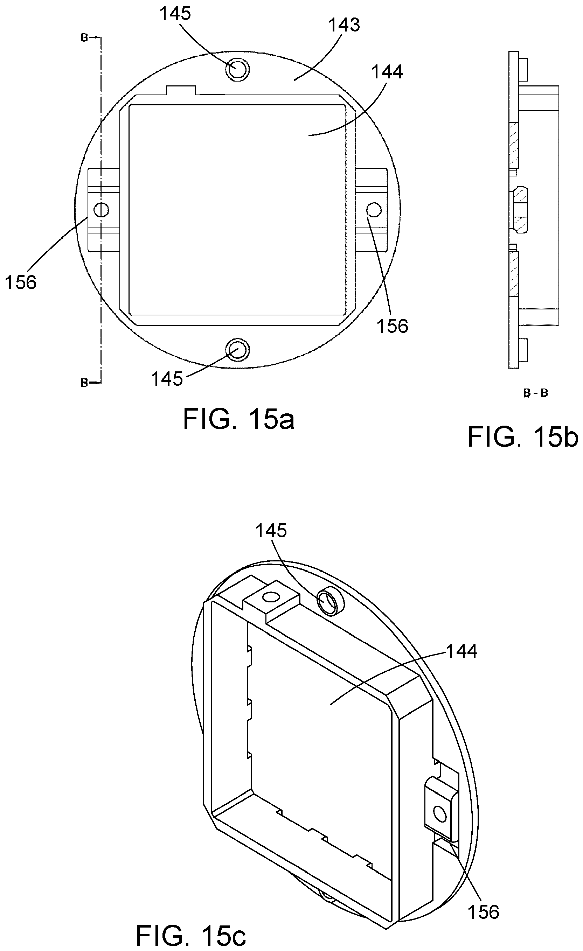

Figures 15a to 16e show another embodiment of a mounting plate 143 in round form used in conjunction with a circular section back box (not shown) and a substantially square external fascia 151. For convenience, like components are labelled with the same two-digit reference with an additional third digit, '1', placed before the common two digits. Unless otherwise stated these components are structurally and functionally similar to those previously described with reference to an earlier embodiment of the invention. The assembly comprising the external cover or fascia 151 and the mounting plate 143 is labelled generally at 50 in these figures.

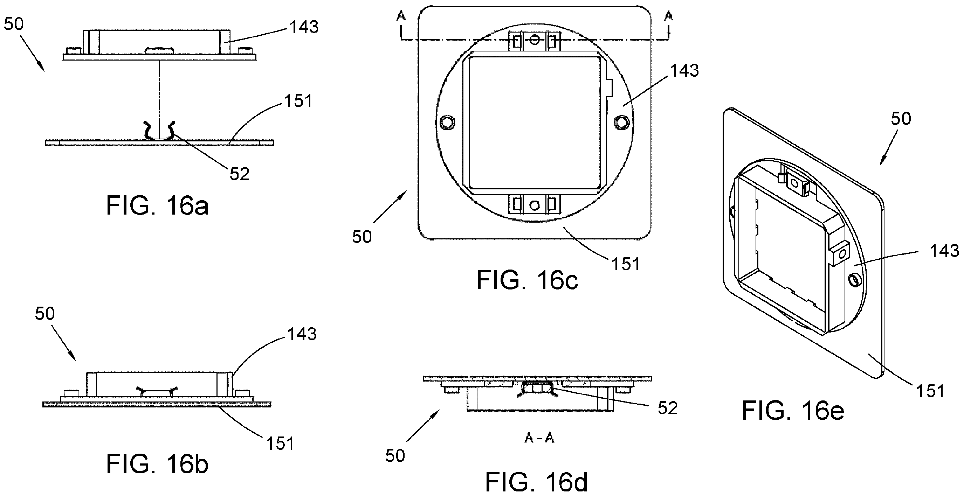

Figures 16a,16b and 16d demonstrate a mode of connection between the fascia 51 and the mounting plate 143. A rear side of the fascia 151 carries two resilient or spring clips 52 that are resiliently deformable to enable interconnection of the fascia 151 with the mounting plate 143 via the receiving slots 156.

According to alternative embodiments, the divider 20 may comprise a dividing portion that is substantially planar, and the body 11 may be provided with two parallel slots on opposing internal surfaces such that the dividing portion may be slotted into the body to divide the chamber 12 at the required location.

Modifications and improvements can be made without departing from the scope of the invention. Relative terms such as "inner", "outer", "edge" and/or "central" are used for illustrative purposes only and are not intended to limit the scope of the invention.

## Claims

1. A module (60) for housing within a wall (41) such that the module (60) does not extend substantially beyond an outer planar face of the wall (41), the module (60) comprising:
a body (10) defining a chamber (12) for housing electrical components;
a mounting plate (43) adapted for connection to an external fascia (51), the mounting plate (43) shaped and configured for accommodation within the chamber (12) of the body (10); and
**characterised in that** an internal surface of the body (10) is shaped and configured (16, 49) to securely receive the mounting plate (43) in a secured configuration, such that the mounting plate (43) is entirely accommodated within the chamber (12) of the body (10) in the secured configuration.

2. A module (60) as claimed in claim 1, wherein the chamber (12) is accessible via an opening (13) defined by an outer perimeter (15) of the body (10), wherein the mounting plate (43) is accommodated within the chamber (12) via the opening (13) and wherein an inner surface of the body (10) comprises an inwardly projecting step (16) that acts as a support for the mounting plate (43) and wherein the step (16) is located at a predetermined distance from the outer perimeter (15) of the body (10), such that a portion of the volume between the step (16) and the outer perimeter (15) defines a mounting plate receiving portion.

3. A module (60) as claimed in claim 2, wherein the outer perimeter (15) of the body (10) and an external face of the mounting plate (43) form a substantially planar external surface in the secured configuration, such that the outer perimeter (15) of the body (10), an external face of the mounting plate (43) and an external surface of the wall are substantially contiguous when the module (60) is housed within a wall (41) in use.

4. A module (60) as claimed in claim 2 or claim 3, wherein an interior of the body (10) comprises at least two elongate slots (49) for receiving fixing means (46) and wherein the mounting plate (43) is provided with holes (45) in locations corresponding to the elongate slots (49) in the secured configuration, such that fixing means (46) are securable through the holes (45) and elongate slots (49) enabling the mounting plate (43) to be fixed in place within the receiving portion defined between the step (16) and outer perimeter (15) of the body (10).

5. A module (60) as claimed in any preceding claim, wherein the module (60) further comprises an external fascia (51) in the form of an externally mountable switch or a socket, and wherein the external fascia (51) provides the means for selective interconnection of the electrical components housed within the body to an external power source.

6. A module (60) as claimed in claim 5, wherein the mounting plate (43) is configured to interconnect with the external fascia (51), such that the mounting plate (43) is connectable to the externally mountable switch or socket via any suitable connecting means including but not limited to: an interference fitting; resilient connecting means; complementary inter-engageable portions and/or fixing means.

7. A module (60) as claimed in claim 6, wherein the external fascia (51) extends less than around 2.5 mm beyond an outer perimeter (15) of the body (10) and hence by less than around 2.5 mm beyond an external surface of the wall (41) in use.

8. A module (60) as claimed in any preceding claim, wherein the module (60) further comprises a plurality of inter-engaging features and selectively engageable complementary components, wherein each complementary component is arranged to selectively engage with at least one of the inter-engaging features to alter the configuration of the module (60).

9. A kit of parts comprising a module (60) with a body and a mounting plate (43) as claimed in any preceding claim.

10. A module (60) mountable within a wall in use, the module (60) comprising:
a body (10) defining a chamber (12) for housing electrical components and having a plurality of inter-engaging features, wherein the chamber (12) of the body (10) is accessible via an opening defined by a perimeter (15) around an outer edge of the body (10) and wherein the exterior of the body (10) is adapted for location within a wall in an operational position;
selectively engageable complementary components, each complementary component arranged to selectively engage with at least one of the inter-engaging features of the body (10) to form different configurations of the module (60); and
**characterised in that** the selectively engageable complementary components comprise at least three components selected from the group including but not limited to: securing features, a collar (30), a cover (27), a trim (35), an insert, a divider (20), and a mounting plate (43).

11. A module (60) as claimed in claim 10, wherein the module (60) comprises a selectively engageable complementary component in the form of a collar (30) to facilitate use of the module (60) on walls to be covered with a surface finish, wherein the collar (30) comprises a substantially planar collar portion (25) arranged to extend parallel to a surface of the wall (41) in use, and wherein the collar (30) and an exterior of the body (10) comprise complementary inter-engaging features enabling the collar (30) to securely engage with the body (10) in use, and wherein the inter-engaging features comprise locator key (31) and slot features (14) that are engageable in a secure configuration in which the collar (30) is accurately positioned on the exterior of the body (10) with the planar collar portion (25) spaced at a pre-selected distance from the perimeter (15) of the body (10), the pre-selected distance corresponding to the depth of the intended surface finish to be applied to the wall (41).

12. A module (60) as claimed in any one of claims 10 or 11, wherein the module (60) comprises a selectively engageable complementary component in the form of a cover (27), wherein the cover (27) comprises material shaped to substantially cover the opening of the body (10) and restrict ingress of debris into the chamber (12) for housing electrical components wherein the cover (27) is engageable with the body (10) to create an enclosure for the chamber (12) such that electrical components housed therein are substantially protected from debris, and wherein the cover (27) comprises a substantially planar outer surface with inter-engaging features on an opposing internal surface of the cover (27), and wherein the inter-engaging features on the cover (27) are resiliently co-operable with corresponding inter-engaging features on an inner surface of the body (10), such that the cover (27) is selectively engageable with the body (10) to substantially enclose the chamber (12).

13. A module (60) as claimed in any one of claims 10 to 12, wherein the module (60) comprises a selectively engageable complementary component in the form of a divider (20), wherein the divider (20) comprises a divider portion (21) for dividing the chamber (12) within the body (10) into sub-compartments (22, 23) and wherein the inter-engaging features comprise complementary locating slots (28) and locator portions (19).

14. A module (60) as claimed in any one of claims 10 to 13, wherein the module (60) comprises a selectively engageable complementary component in the form of a mounting plate (43) and wherein an internal surface of the body (10) is shaped and configured to securely receive the mounting plate (43) such that the mounting plate (43) is entirely accommodated within the chamber (12) of the body (10) in a secured configuration, and wherein the module (60) comprises an external fascia (51) comprising a switch or a socket connectable to the mounting plate, (43) wherein the switch or socket is connectable to electrical components housed within the body and wherein the external fascia (51) extends by less than around 2.5 mm beyond an outer perimeter (15) of the body and hence by less than around 2.5 mm beyond an external surface of the wall is use.

15. A kit of parts comprising a module (60) with a body and at least three selectively engageable complementary components as claimed in any one of claims 10 to 14.
